# EUROPEAN PATENT APPLICATION

(11) **EP 4 485 598 A1**
(43) Date of publication of application: **01.01.2025**
(21) Application number: 24170048.3
(22) Date of filing: 12.04.2024
(51) Int. Cl.: H01M 10/0525, H01M 10/0568, H01M 10/0569, H01M 10/052, H01M 10/0567

(54) **ELECTROLYTE AND ENERGY STORAGE DEVICE**

(30) Priority: 30.06.2023 CN 202310799173
(71) Applicant: Xiamen Hithium Energy Storage Technology Co., Ltd., Xiamen, Fujian 361100 (CN)
(72) Inventor: ZOU, Wei, Xiamen, 361100 (CN); XU, Kun, Xiamen, 361100 (CN)
(74) Representative: Mewburn Ellis LLP

(57) **Abstract**

The present disclosure provides an electrolyte and an energy storage device. The electrolyte includes, measured by mass of electrolyte, a fluorinated solvent with a mass percentage a, a cyclic carbonate with a mass percentage b, and a lithium hexafluorophosphate with a mass percentage c, wherein 1% ≤ a ≤ 30%, 25% ≤ b ≤ 45%, and 7% ≤ c ≤ 10%. The energy storage device prepared by utilizing the electrolyte is able to ensure a better overcharging safety performance when it has a large single cell capacity.

## Description

### TECHNICAL FIELD

The present disclosure relates to a technical field of energy storage devices, and in particular to an electrolyte and an energy storage device.

### BACKGROUND

In existing energy storage devices, compared to small-capacity cells, large-capacity cells further gain advantages in cost and energy density. However, due to poor heat dissipation of the large-capacity cells, during an overcharging safety test, heat is highly likely to accumulate in the large-capacity cell. Accumulation of heat is likely to cause a chain of chemical reactions within the cell, resulting in cell failure, fire and other safety issues, which in turn affects overcharging safety performance of the energy storage device.

### SUMMARY

The purpose of the embodiments of the present disclosure is to provide an electrolyte and an energy storage device, in which the energy storage device prepared by utilizing the electrolyte is able to have a better overcharging safety performance when it has a larger single cell capacity.

Embodiments of the present disclosure provide an electrolyte. The electrolyte, by mass of electrolyte, includes a fluorinated solvent with a mass percentage a, a cyclic carbonate with a mass percentage b, and a lithium hexafluorophosphate with a mass percentage c, wherein 1% ≤ a ≤ 30%, 25% ≤ b ≤ 45%, and 7% ≤ c ≤ 10%.

Embodiments of the present disclosure provide the electrolyte. The fluorinated solvent is introduced into the electrolyte to enhance an oxidation resistance of the electrolyte and reduce the heat generated by an oxidation reaction occurring in the electrolyte during an overcharging process. Meanwhile, while introducing the fluorinated solvent, in order to solve a problem that the fluorinated solvent is prone to undergo a reduction reaction at a cathode, the embodiments of the present disclosure reduce a content of the lithium hexafluorophosphate in the electrolyte, so as to ensure that there is a sufficient conductivity of lithium ions in the electrolyte, and at the same time, it is possible to reduce a content of Lewis acid formed by an reaction between the lithium hexafluorophosphate in the electrolyte and the water in the electrolyte, so as to make a solid electrolytes interface film (SEI film) formed on a surface of a negative electrode sheet and an anode surface passivation film (CEI film) formed on a surface of a positive electrode sheet less corrosive, and at the same time, reduce a seizure of F on the fluorinated solvent by the Lewis acid, and reduce a defluorination effect of the fluorinated solvent, which makes the fluorinated solvent work better in the overcharging process. In addition, by increasing the content of the cyclic carbonate in the electrolyte, using a characteristic that the cyclic carbonate can be ring-opened polymerized at a cathode to form a dense SEI film solves a problem of competition causing poor film formation when the fluorinated solvent was introduced into the electrolyte. At the same time, the high concentration of cyclic carbonate is able to stabilize the cathode and at the same time, prevent the depletion and oxidation of the fluorinated solvent at the cathode side, stabilize the content of the fluorinated solvent in the electrolyte, thus indirectly improves an oxidation resistance of the electrolyte, and further improves the charging/discharging cycle performance of the energy storage device while improving the overcharging safety performance of the energy storage device.

In one possible embodiment, the cyclic carbonate is selected from at least one of vinyl carbonate, propylene carbonate, fluorinated vinyl carbonate, difluorinated vinyl carbonate, and vinylidene carbonate.

In one possible embodiment, the fluorinated solvent includes at least one of fluorinated carbonate, fluorinated carboxylic acid ester, and fluorinated ether.

In one possible embodiment, the fluorinated carbonate is selected from at least one of chemical formula (I-1) to chemical formula (I-7): 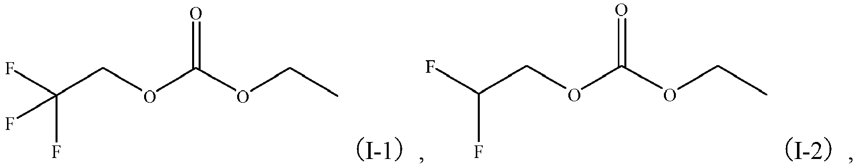 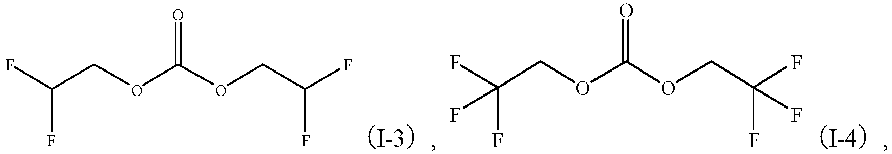 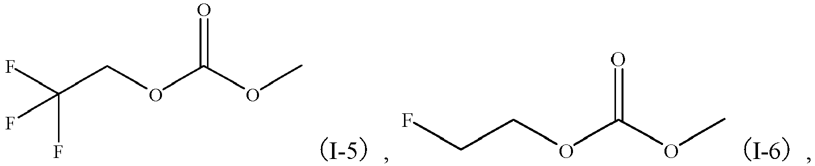 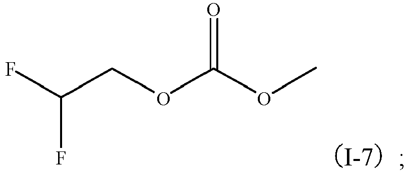 the fluorinated carboxylic acid ester is selected from at least one of chemical formula (I-8) to chemical formula (I-17): 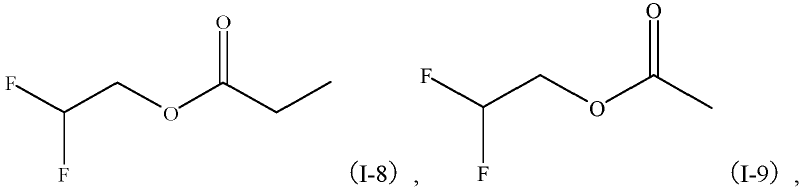 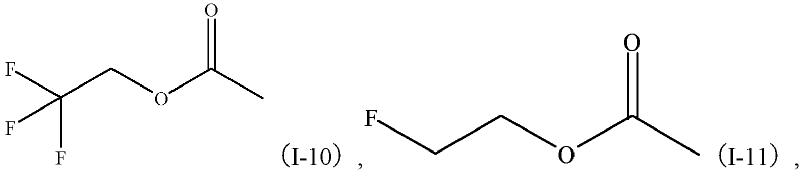 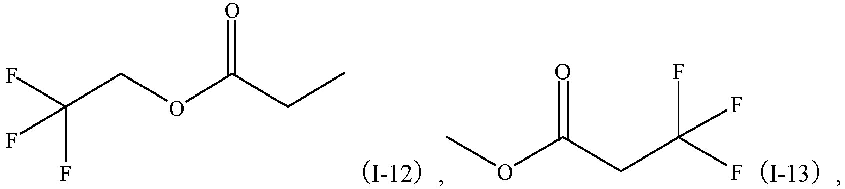 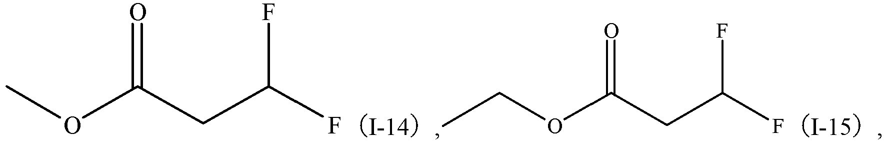 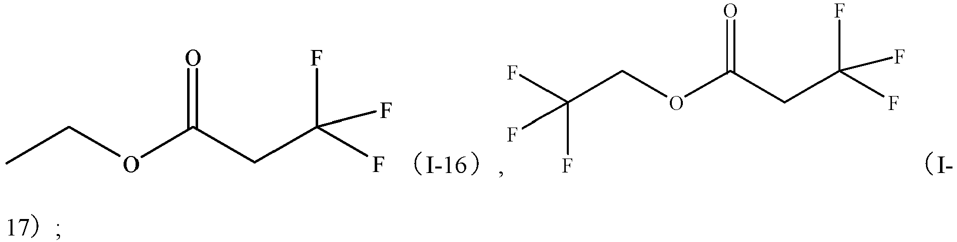 the fluorinated ether is selected from at least one of chemical formula (I-18) to chemical formula (I-21):

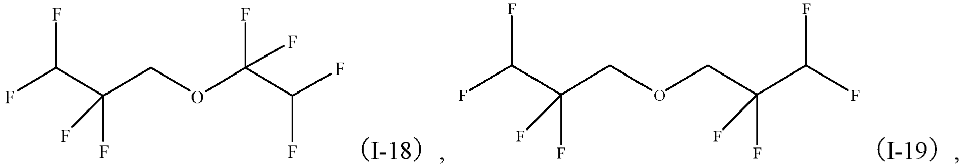

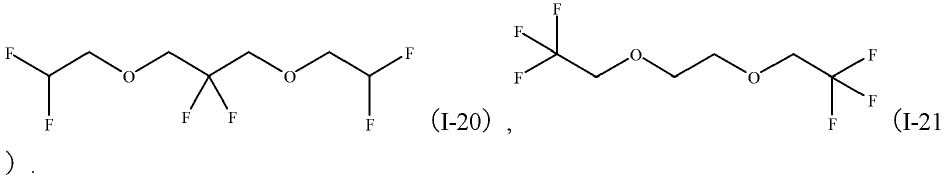

In one possible embodiment, the electrolyte includes a lithium salt. The lithium salt includes the lithium hexafluorophosphate. The lithium salt further includes at least one of lithium difluorophosphate, lithium bis(fluorosulfonyl)imide, bistrifluoromethanesulfonimide lithium salt, lithium oxalyldifluoro borate, lithium bis(oxalate)borate, and lithium tetrafluorob orate.

Embodiments of the present disclosure also provide an energy storage device including a positive electrode sheet and an electrolyte as described above.

In one possible embodiment, the positive electrode sheet includes an anode current collector and an anode active layer coated on a surface of the anode current collector, and in the positive electrode sheet, a coating density of the anode active layer is t g/1540.25 mm², and the following relation is satisfied: 0.07≤(1-a-b)*c/t≤0.288. By satisfying the above relation, it is possible to guide a preparation of the energy storage device to have a large-capacity single cell while ensuring that the cell passes an overcharging safety test with a performance rating of up to standard, so as to realize to guide the preparation of the energy storage device to have a better overcharging safety performance.

In one possible embodiment, 0.25≤t≤0.4.

In one possible embodiment, materials in the anode active layer includes lithium iron phosphate.

In one possible embodiment, the energy storage device has a capacity of not less than 280Ah.

### DETAILED DESCRIPTION OF ILLUSTRATED EMBODIMENTS

The technical solutions in the embodiments of the present disclosure will be clearly and completely described below with reference to the accompanying drawings in the embodiments of the present disclosure. Obviously, the embodiments described are only a part of the embodiments of the present disclosure, and not all of them. Based on the embodiments in the present disclosure, all other embodiments obtained without creative work by a person of ordinary skill in the art shall fall within a protection scope of the present disclosure.

Embodiments of the present disclosure provide an energy storage device. The energy storage device includes an outside shell, at least one cell, and an electrolyte. Specifically, the at least one cell is mounted to an inner side of the outside shell. The electrolyte is injected into the inner side of the outside shell and infiltrates the at least one cell. Exemplary, the energy storage device has an overall capacity of not less than 280 Ah (Ampere-Hour). Exemplary, the energy storage device may be a lithium ion battery.

The cell includes a positive electrode sheet, a separator, a negative electrode sheet, a positive tab, and a negative tab. The separator is located between the positive electrode sheet and the negative electrode sheet. The positive tab is electrically connected to the positive electrode sheet. The negative tab is electrically connected to the negative electrode sheet. Exemplary, the positive electrode sheet, the separator, and the negative electrode sheet may be stacked in sequence, coiled to form a bare cell, and then soldered to the positive tab and the negative tab, thus the cell is prepared.

The positive electrode sheet includes an anode current collector and an anode active layer coated on a surface of the anode current collector. In the positive electrode sheet, a coating density of the anode active layer is t g/1540.25 mm², which satisfies 0.25≤t≤0.4, where t denotes a coating weight of an anode material layer. Exemplary, the anode current collector is an aluminum foil. The anode material layer includes materials such as anode active materials, additives and the like. Exemplary, the anode active materials are lithium iron phosphate. Where the additives in the anode material layer include a bonding agent, a conductive agent and the like. Exemplary, the bonding agent is polyvinylidene difluoride (PVDF), and the conductive agent is conductive carbon black SP (Super P).

Specifically, the coating weight t of the anode active layer may be a value such as 0.25, 0.3, 0.4 and the like, and any value between the above values. The smaller the coating weight t of the anode active layer is, the lower the energy density of the prepared energy storage device will be, and at the same time, more cell materials, such as the current collector, the shell, and the like, will be consumed, which will make the cost of the energy storage higher. The larger the coating weight t of the anode active layer is, the cost of the energy storage device will be reduced, but too large t, which exceeds a range value, will make the infiltration of the material problematic, which will lead to an emergence of lithium precipitation and gas production, thereby affecting the overcharging safety performance and charging/discharging cycle performance of the energy storage device.

The separator may be an existing battery separator, exemplary, the separator is a polyethylene film. The negative electrode sheet includes a cathode current collector and a cathode active layer coated on a surface of the cathode current collector. Exemplary, the cathode current collector is an aluminum foil. The cathode active layer includes materials such as cathode active materials, additives and the like. Exemplary, the cathode active materials is graphite. The additives in the cathode active layer include materials such as thickening agent, bonding agent, conductive agent, and the like. Exemplary, the bonding agent is polymerized styrene butadiene rubber (SBR), and the conductive agent is conductive carbon black SP (Super P).

The electrolyte includes a solvent and a lithium salt. The solvent includes a fluorinated solvent and a cyclic carbonate. The lithium salt includes a lithium hexafluorophosphate (LiPF6). Exemplary,by mass of electrolyte, a mass percent of the fluorosubstituted solvent is a, 1% ≤ a ≤ 30%, a mass percent of the cyclic carbonate is b, 25% ≤ b ≤ 45%, and a mass percent of the lithium hexafluorophosphate is c, 7% ≤ c ≤ 10%. In some embodiments, 3% ≤ a ≤ 15%. It is to be understood that a conventional electrolyte solvent, such as dimethyl carbonate, methyl ethyl carbonate, etc., may also be added to the electrolyte. It is to be understood that additives such as vinyl sulfate (1,3,2-dioxathiolane 2,2-dioxide, DTD) may also be added to the electrolyte.

Specifically, the mass percentage content a of the fluorinated solvent may be a value such as 1%, 3%, 5%, 10%, 15%, 30%, and the like, and any value between the above values. Too small of the content a of the fluorinated solvent will not sufficiently improve the overcharging safety performance of the formed energy storage device. Too much of the content a of the fluorinated solvent will affect the viscosity and conductivity of the electrolyte, which will have a deteriorating effect to the charging/discharging cycle performance. By controlling the content a of the fluorinated solvent to meet the value of 1% ≤ a ≤ 30%, it is advantageous to ensure that the formed energy storage device has a better overcharging safety performance and a better charging/discharging cycle performance at the same time.

The mass percentage content b of the cyclic carbonate may be 25%, 27%, 35%, 40%, 45%, and the like, and any value between the above values. The main function of the cyclic carbonate is to form a film at both the anode and the cathode. When the content b of the cyclic carbonate is too small, it is unable to protect the anode and the cathode, and will have an unfavorable effect on the overcharging safety performance and the charging/discharging cycle performance. If the content b of cyclic carbonate is too much, the cathode may form a film that is too thick, and excessive film thickness may lead to problems at the cathode interface, and once there are problems at the interface, the overcharging safety performance and the charging/discharging cycle performance will deteriorate. By controlling the content b of the cyclic carbonate to meet 25% ≤ b ≤ 45%, it is beneficial to ensure that the formed energy storage device has better overcharging safety performance and charging/discharging cycle performance at the same time.

The mass percentage content c of the lithium hexafluorophosphate may be 7%, 7.5%, 8%, 9%, 10% and the like, and any value between the above values. If the content c of the lithium hexafluorophosphate is too small, it mainly affects the conductivity of the electrolyte, and the ion transport will be problematic, thus deteriorating the charging/discharging cycling performance of the formed energy storage device. If the content c of the lithium hexafluorophosphate is too much, it will increase the viscosity of the electrolyte, which is not good for the conductivity, and it will also produce more acidic substances such as PF5, POF3, and the like, causing damage to SEI and CEI, thus affecting the charging/discharging cycling performance of the formed energy storage device. By controlling the content c of the lithium hexafluorophosphate to meet 7%≤c≤10%, it is advantageous to ensure that the formed energy storage device has both better overcharging safety performance and charging/discharging cycling performance.

The fluorinated solvent includes at least one of fluorinated carbonate, fluorinated carboxylic acid ester, and fluorinated ether. Exemplary, the fluorinated carbonate is selected from at least one of chemical formula (I-1) to chemical formula (I-7): 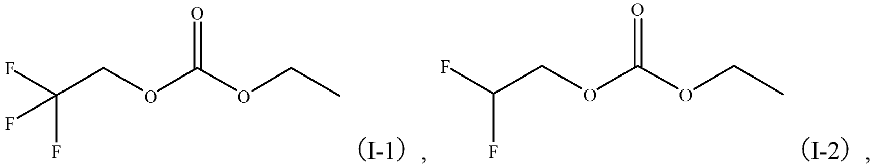 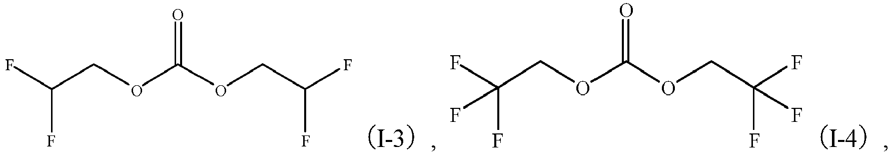 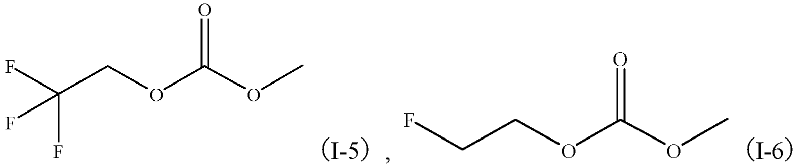 and

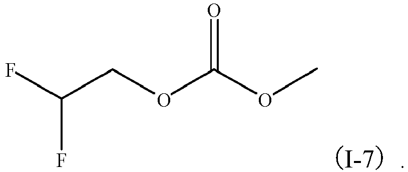

Exemplary, the fluorinated carboxylic acid ester is selected from at least one of chemical formula (I-8) to chemical formula (I-17):

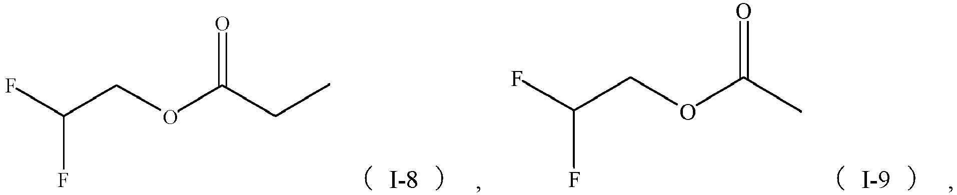

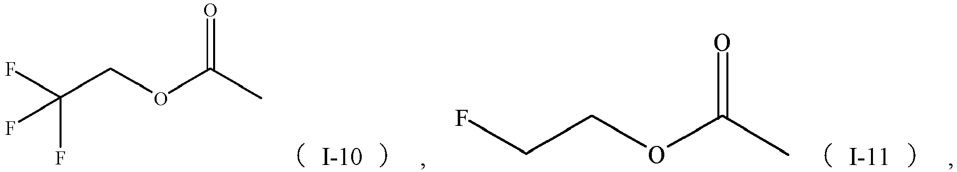

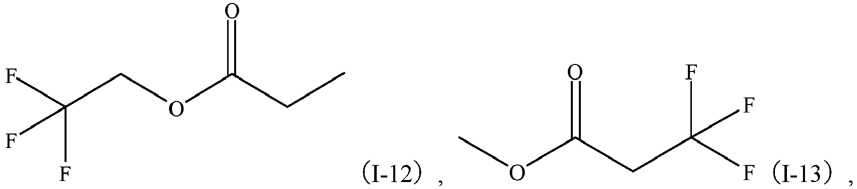

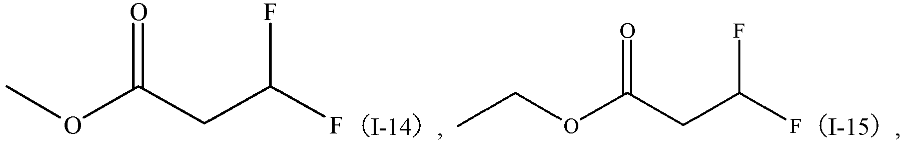

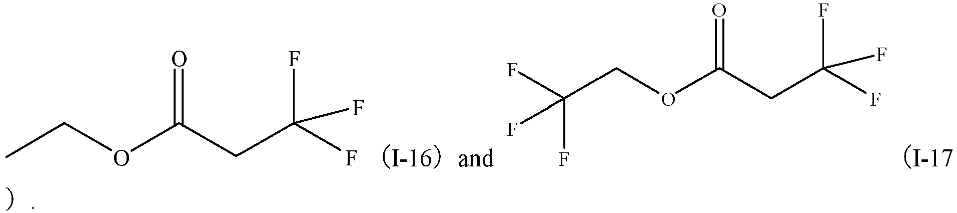

The fluorinated ether is selected from at least one of chemical formula (I-18) to chemical formula (I-21): 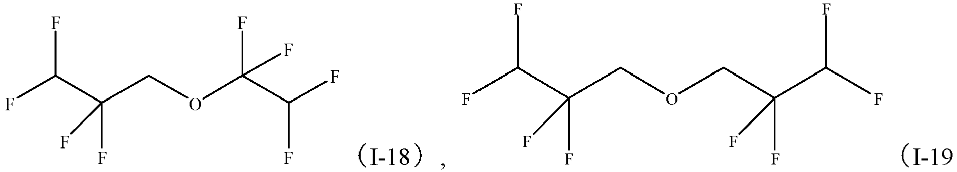 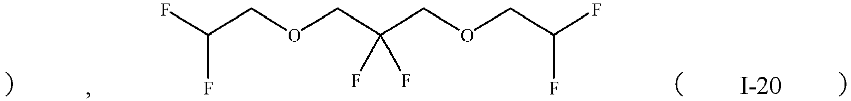 and

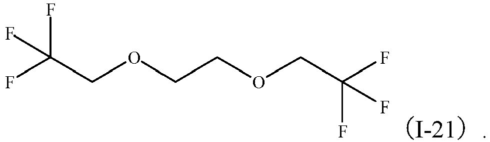

The cyclic carbonate is selected from at least one of ethylene carbonate (EC), propylene carbonate (PC), fluoroethylene carbonate (FEC), di-fluoro ethylene carbonate (DFEC), and vinylene carbonate (VC).

The lithium salt may further include lithium difluorophosphate (LiDFP), lithium bis(fluorosulfonyl)imide (LiFSI), bistrifluoromethanesulfonimide lithium salt (LiTFSI), lithium oxalyldifluoro borate (LiODFB), lithium bis(oxalate)borate (LiBOB), and lithium tetrafluoroborate (LiBF4).

In the energy storage device, increasing the coating weight t of the anode active layer and preparing the large-capacity cell bring benefits in terms of higher overall energy density of the cell and lower cost of the cell, but they also pose challenges to the safety performance of the cell. On the one hand, the higher coating weight of the anode active layer brings more electrode ohmic impedance to the cell, and the increase of cell impedance leads to more Joule heat generated during the charging process. On the other hand, the capacity of the single cell prepared is above 280Ah, and the large-capacity cell has further gained advantages in cost and energy density compared to the small-capacity cell. However, due to the poor heat dissipation of the high-capacity cell, heat is easily accumulated in the cell during the charging process, and the accumulation of heat can easily cause a chain of chemical reaction within the cell, resulting in safety issues such as cell failure, fire and the like.

In the overcharging safety test of the cell of the energy storage device, the voltage will rise to the maximum voltage of 1.5V during continuous charging, at this time, the cell is continuously charging, the voltage rises, and the electrolyte undergoes oxidation reaction at the anode, and the reaction heat generated by the reaction accumulates in the cell, and when the heat reaches a certain level, the reaction between the electrolyte and the positive electrode sheet further aggravates under the action of high temperature, and at the same time, the SEI (solid electrolyte interphase) film formed on the negative electrode sheet starts to decompose because of high temperature, the decomposition reaction of SEI film brings reaction heat, and at the same time, because of the decomposition of SEI film at high temperature, the cathode in full charge state is directly contacted with the electrolyte, and the reduction reaction of the electrolyte occurs at the cathode, which further generates heat and accumulates heat. Under the influence of high temperature brought by this heat, the separator in the cell melts and ruptures, resulting in contact between the anode and cathode, and then the cell is very likely to catch fire and explode, thus affecting the safety performance of the cell.

In order to solve the safety problem that the accumulation of heat in the large-capacity cell causes a chain of chemical reaction within the cell that results in cell failure, fire, etc., embodiments of the present disclosure provide the electrolyte including a fluorinated solvent with a mass fraction of 1%~30%, a cyclic carbonate with a mass fraction of 25%~45%, and a lithium hexafluorophosphate with a mass fraction of 7%~10%. The fluorinated solvent is introduced into the electrolyte to enhance the oxidation resistance of the electrolyte and reduce the heat generated by the oxidation reaction of the electrolyte during the overcharging process. Meanwhile, while introducing the fluorinated solvent, in order to solve the problem that the fluorinated solvent is prone to undergo a reduction reaction at the cathode, the embodiment of the present disclosure reduces the content of the lithium hexafluorophosphate in the electrolyte, so as to ensure that there is a sufficient conductivity of lithium ions in the electrolyte, and at the same time, it is possible to reduce the content of Lewis acid formed by the reaction between the lithium hexafluorophosphate in the electrolyte and the water in the electrolyte, so as to make a solid electrolyte interphase film (SEI film) formed on a surface of the negative electrode sheet and an anode surface passivation film (CEI film) formed on a surface of the positive electrode sheet less corrosive, and at the same time reduce a seizure of F on the fluorinated solvent by the Lewis acid, and reduce a defluorination effect of the fluorinated solvent, which makes the fluorinated solvent work better in the overcharging process. In addition, by increasing the content of the cyclic carbonate in the electrolyte, using a characteristic that the cyclic carbonate can be ring-opened polymerized at the cathode to form a dense SEI film solves a problem of competition causing poor film formation when the fluorinated solvent was introduced into the electrolyte. At the same time, the high concentration of cyclic carbonate is able to stabilize the cathode and at the same time, prevent the depletion and oxidation of the fluorinated solvent on the cathode side, stabilize the content of the fluorinated solvent in the electrolyte, thus indirectly improving an oxidation resistance of the electrolyte, and further improving the charging/discharging cycle performance of the energy storage device while improving the overcharging safety performance of the energy storage device.

Furthermore, the coating weight t of the anode active layer, the mass percent content a of the fluorinated solvent, the mass percent content b of the cyclic carbonate, and the mass percent content c of the lithium salt, satisfy the following relationship: 0.07≤(1-a-b)*c/t≤0.288, where "*" denotes a multiplication sign. Specifically, (1-a-b)*c/t may be a value such as 0.07, 0.15, 0.16, 0.17, 0.18, 0.19, 0.20, 0.21, 0.27, 0.288, and the like, and any value between the above values. When (1-a-b)*c/t is less than 0.07, due to the combined effect of several factors, lithium precipitation may occur in the porosity or on the cathode layer, causing a large number of reactions between the dendrites precipitated from the cathode and the electrolyte in the process of overcharging, generating a large amount of reaction heat, resulting in an unsatisfactory situation of the overcharging test effect, and meanwhile, in the process of cycling, due to the appearance of lithium precipitation, on the one hand, dead lithium is generated, which causes irreversible loss of capacity, and at the same time, due to the reaction between the lithium precipitation and the electrolyte, it causes interface problems such as byproducts and gas production, which leads to unsatisfactory cycling performance of the energy storage device. When (1-a-b)*c/t > 0.288, there may be insufficient oxidation resistance of the electrolyte and insufficient passivation protection of the electrolyte on the anode and the cathode, and at this time, the electrolyte can not play a role in improving the overcharging performance. By controlling 0.07≤(1-a-b)*c/t≤0.288, it can guide the preparation of the energy storage device to have large-capacity single cell and at the same time, ensure that the cell passes the overcharging safety test with a performance rating of up to standard and has good charging/discharging cycling performance, thus realizes the guidance for the preparation of the energy storage device with better overcharging safety performance and good charging/discharging cycling performance, which can be realized to guide the preparation of the energy storage device with good overcharging safety performance and good charging/discharging cycle performance.

The following experimental proofs are carried out by means of specific embodiments. Embodiments 1-23 and comparative examples 1-12 both provide an energy storage device, and the energy storage device is taken a lithium-ion battery as an example, which is specifically prepared according to the following steps.

Preparation of the positive electrode sheet: the anode active material lithium iron phosphate, the conductive carbon black SP, and the bonding agent PVDF are dispersed into the solvent NMP (N-Methylpyrrolidone) according to a mass ratio of 97:0.7:2.3 for mixing and homogenization to obtain anode slurry; the anode slurry is coated on an aluminum foil of the anode current collector, which is then dried, cold pressed, slit, and sheet cut to obtain the positive electrode sheet. The anode slurry was coated to form the anode active layer, and the coating density of the anode active layer was t g/1540.25 mm², and t denotes the coating mass of the anode active layer.

Preparation of the negative electrode sheet: the cathode active materials artificial graphite, the conductive carbon black SP, thickening agent CMC and binding agent SBR are dispersed into the solvent according to a mass ratio of 96.5:0.5:1:2 to obtain cathode slurry, and then the cathode slurry is coated on an aluminum foil of the cathode current collector, which is then dried, cold pressed, slit and and sheet cut to obtain the negative electrode sheet. The cathode slurry is coated to form the cathode active layer.

Preparation of the electrolyte: in an argon atmosphere glove box with a moisture content of ≤1 ppm, the solvent A, dimethyl carbonate, and methyl ethyl carbonate were mixed according to a mass ratio of 1:1:1, and then the dried electrolyte lithium hexafluorophosphate (LiPF6) was dissolved in the solvent, and stirred until it was completely dissolved and homogeneous, and then the electrolyte was obtained by adding the solvent A and mixing homogeneously. The solvent A includes a fluorinated solvent and a cyclic carbonate.

Preparation of the separator: 16um polyethylene film was used as the separator.

Preparation of the lithium-ion battery: the prepared positive electrode sheet, the separator and the negative electrode sheet are stacked in order, so that the separator is in the middle of the positive electrode sheet and the negative electrode sheet to separate the positive electrode sheet from the negative electrode sheet, and the bare cell is obtained after winding the prepared and stacked positive electrode sheet, the separator and the negative electrode sheet, and the cell is obtained after welding the positive tab and the negative tab to the bare cell, and the cell is assembled into the outer shell and injected into the prepared electrolyte. After injecting the prepared electrolyte, the cell is encapsulated, rested, chemicalized, shaped, capacity tested, and the like, and the lithium-ion battery is finally prepared.

In the energy storage device provided in embodiments 1-23 and comparative examples 1-12, the capacity of the single cell, the coating weight t of the anode active layer, the content of the solvent A and the lithium salt LiPF6 are shown in Table 1. The energy storage device of embodiments 1-23 and comparative examples 1-12 were taken for charging/discharging cycle performance test and safety overcharging test, and the results are shown in Table 1.

The charging/discharging cycling performance test is performed as follows: the energy storage device is subjected to a charging/discharging cycling test on a charging/discharging instrument at a test temperature of 25°C, a cycling multiplier of 1C (i.e., both the charge multiplier and the discharge multiplier are 1C), and a charging voltage of 2.5 V to 3.65 V, and the capacity retention after cycling is calculated. The formula for the capacity retention for the 25°C: capacity retention rate after the nth cycle = (discharged capacity after the nth cycle / discharged capacity in a first lap of the cycle)* 100%.

The process of safe overcharging test is as follows: test the energy storage device on the charging/discharging instrument, leave it at (25±2)°C for 5h; discharge 1C to 2.5V, charge 1C to 3.65V and leave it for 10min, then transfer it to the overcharging test instrument for testing, charge it with constant current of 1C to make the voltage of the device reach 5.475V or the charging time reach 1h, observe it for 1h, and record whether there is swelling, liquid leakage, smoke, fire or explosion. Rating: cell without liquid leakage is a first level of compliance; cell with liquid leakage but no smoke is a second level of compliance; cell with liquid leakage, smoke, but no fire, no explosion, is a third level of compliance; cell with fire or explosion, is a fourth level, i.e., does not meet the standard.

**Table 1 composition and properties of the energy storage device of embodiments 1-23 and comparative examples 1-12**

| Serial number | Capacity of single cell(Ah) | Coating density of anode t g/1540.25 mm² | Fluorinated solvent | | LiPF6 Contain c | Cyclic carbonate | | (1-a-b)*c/t | Overcharging safety performance rating | Capacity retention for 1000 cycles at 25°C |
|---|---|---|---|---|---|---|---|---|---|---|
| | | | Category | Contain a | | Category | Contain b | | | |
| Comparative example1 | 50 | 0.3 | \ | \ | 10.00% | EC | 2000% | \ | Level 2 | 82.30% |
| Comparative example 2 | 100 | 0.3 | \ | \ | 10.00% | EC | 2000% | \ | Level 2 | 82.70% |
| Comparative example 3 | 200 | 0.3 | \ | \ | 10.00% | EC | 2000% | \ | Level 3 | 80.50% |
| Comparative example 4 | 280 | 0.3 | \ | \ | 10.00% | EC | 2000% | \ | Level 4 | 77.30% |
| Comparative example 5 | 280 | 0.25 | \ | \ | 10.00% | EC | 2000% | \ | Level 3 | 80.70% |
| Comparative example 6 | 280 | 0.35 | \ | \ | 10.00% | EC | 2000% | \ | Level 4 | 75.30% |
| Comparative example 7 | 280 | 0.4 | \ | \ | 10.00% | EC | 2000% | \ | Level 4 | 68.20% |
| Comparative example 8 | 280 | 0.3 | (I-1) | 0.5% | 15% | EC | 20% | 0.4 | Level 4 | 73.4% |
| Comparative example 9 | 280 | 0.2 | \ | \ | 10.00% | EC | 2000% | \ | Level 3 | 81.5% |
| Comparative example 10 | 280 | 0.3 | (I-18) | 50% | 10.00% | EC | 25% | 0.08 | Level 2 | 63.2% |
| Comparative example 11 | 280 | 0.3 | (I-18) | 5% | 4% | EC | 25% | 0.09 | Level 2 | 64.4% |
| Comparative example 12 | 280 | 0.3 | (I-18) | 5% | 9% | EC+VC | 60% | 0.11 | Level 3 | 85.3% |
| Embodiment 1 | 280 | 0.3 | (I-1) | 10% | 10.00% | EC | 25% | 0.27 | Level 2 | 76.4% |
| Embodiment 2 | 280 | 0.3 | (I-5) | 10% | 10.00% | EC | 25% | 0.27 | Level 2 | 79.5% |
| Embodiment 3 | 280 | 0.3 | (I-9) | 10% | 10.00% | EC | 25% | 0.27 | Level 2 | 81.8% |
| Embodiment 4 | 280 | 0.3 | (I-18) | 10% | 10.00% | EC | 25% | 0.27 | Level 2 | 79.1% |
| Embodiment 5 | 280 | 0.3 | (I-5) + (I-9 ) | 5%+5% | 10.00% | EC | 25% | 0.27 | Level 2 | 81.2% |
| Embodiment 6 | 280 | 0.3 | (1-5) + (I-18 ) | 5%+5% | 10.00% | EC | 25% | 0.27 | Level 2 | 79.3 % |
| Embodiment 7 | 280 | 0.3 | (I-18) | 1% | 10.00% | EC | 25% | 0.31 | Level 3 | 82.6% |
| Embodiment 8 | 280 | 0.3 | (I-18) | 10% | 10.00% | EC | 25% | 0.27 | Level 2 | 78.8% |
| Embodiment 9 | 280 | 0.3 | (I-18) | 30% | 10.00% | EC | 25% | 0.15 | Level 2 | 70.2% |
| Embodiment 10 | 280 | 0.3 | (I-18) | 5% | 10% | EC | 25% | 0.23 | Level 2 | 81.7% |
| Embodiment 11 | 280 | 0.3 | (I-18) | 5% | 9% | EC | 25% | 0.21 | Level 1 | 79.7% |
| Embodiment 12 | 280 | 0.3 | (I-18) | 5% | 8% | EC | 25% | 0.19 | Level 1 | 77.5% |
| Embodiment 13 | 280 | 0.3 | (I-18) | 5% | 7.5% | EC | 25% | 0.18 | Level 1 | 75.7% |
| Embodiment 14 | 280 | 0.3 | (I-18) | 5% | 7% | EC | 25% | 0.16 | Level 1 | 73.4% |
| Embodiment 15 | 280 | 0.3 | (I-18) | 5% | 9% | EC+VC | 27% | 0.20 | Level 1 | 83.6% |
| Embodiment 16 | 280 | 0.3 | (I-18) | 5% | 9% | EC+VC | 35% | 0.18 | Level 1 | 86.7% |
| Embodiment 17 | 280 | 0.3 | (I-18) | 5% | 9% | EC+VC | 40% | 0.17 | Level 1 | 88.9% |
| Embodiment 18 | 280 | 0.3 | (I-18) | 5% | 9% | EC+VC | 45% | 0.15 | Level 2 | 90.2% |
| Embodiment 19 | 280 | 0.3 | (I-18) | 5% | 9% | EC+VC+ FEC | 45% | 0.15 | Level 2 | 88.6% |
| Embodiment 20 | 280 | 0.3 | (I-18) | 5% | 9% | EC+FEC | 45% | 0.15 | Level 1 | 86.5% |
| Embodiment 21 | 280 | 0.4 | (I-18) | 15% | 7% | EC+VC | 45% | 0.070 | Level 2 | 78.8% |
| Embodiment 22 | 280 | 0.5 | (I-18) | 15% | 7% | EC+VC | 45% | 0.056 | Level 3 | 66.8% |
| Embodiment 23 | 280 | 0.25 | (I-18) | 3% | 10% | EC+VC | 25% | 0.288 | Level 2 | 85.8% |

As can be seen from Table 1, by comparing comparative examples 1 to 4, no fluorinated solvent is added to the electrolyte in the energy storage device of comparative examples 1 to 4. As the capacity of the single cell is raised, the ratings of the energy storage device in the safety overcharging test gradually rise, and the rating of overcharging safety performance of the energy storage device gradually fails to meet the standard. When the capacity of single cell is 280Ah, the rating of the overcharging safety performance of the energy storage device is as low as level 4 , and the overcharging safety performance fails to meet the standard. At the same time, as the capacity of the single cell increases, the capacity retention rate of the energy storage device after 1,000 cycles at 25°C gradually decreases. In contrast, in embodiments 1 to 23, both the fluorinated solvent and the cyclic carbonate were added to the electrolyte of the energy storage device, and the capacity of the single cell can reach more than 280 Ah, and at the same time, the ratings of the overcharging safety performance of the energy storage device are up to standard. The experimental results show that when the fluorinated solvent is not added to the electrolyte in the energy storage device, the overcharging safety performance and charging/discharging cycle performance deteriorate as the capacity of the single cell increases.

By comparing comparative examples 4 to 7, the fluorinated solvent was not added to the electrolyte in the energy storage device of comparative examples 4 to 7, when the single cell has a capacity of large-capacity 280Ah, with the increase of the coating amount t of the anode active layer, the overcharging safety performance of the energy storage device remains poor and the overcharging safety performance basically fails to meet the standard. Meanwhile, the capacity retention rate after 1000 cycles at 25°C gradually decreases. The experimental results show that when the fluorinated solvent is not added in the energy storage device, the overcharging safety performance of the energy storage device basically fails to meet the standard when it has a large capacity of the single cell, and at the same time, the increase of the coating amount t of the anode active layer leads to the deterioration of the charging/discharging cycle performance of the energy storage device.

By comparing comparative examples 4 and embodiments 1 to 20, in a case where the capacity of the single cell of the energy storage device is the same and the coating amount t of the anode active layer is the same, the addition of the fluorinated solvent and the cyclic carbonate to the electrolyte of embodiments 1 to 20 of the present disclosure improves the overcharging safety performance of the energy storage device or improves the capacity retention rate after 1,000 cycles at 25°C. The experimental results show that the addition of both the fluorinated solvent and the cyclic carbonate to the electrolyte is beneficial to improve the overcharging safety performance of the energy storage device or the charging/discharging cycling performance of the energy storage device, and thus is beneficial to improve the overall performance of the energy storage device.

Specifically, by comparing embodiments 1 to 6, the energy storage devices of embodiments 1 to 6 have same capacity of the single cell and same coating amount t of the anode active layer, and different fluorinated solvents are added to the electrolyte of the energy storage device, which can all improve the overcharging safety performance of the energy storage device. Where the fluorinated solvents added in embodiment 2 to embodiment 6 are more effective than the fluorinated solvent added in embodiment 1.

By comparing embodiments 7 to 9, the fluorinated solvent was added to the electrolyte in the energy storage device of embodiments 7 to 9, and the overcharging safety performance of the energy storage device appears to be significantly improved as the content a of the fluorinated solvent gradually increases. The experimental results show that, when the cyclic carbonate is added into the electrolyte, the addition of the fluorinated solvent and the increase of the content of the fluorinated solvent in the electrolyte can improve the overcharging safety performance of the energy storage device. This may be due to the fact that the fluorinated solvent has antioxidant ability, which can greatly improve the oxidation resistance of the electrolyte, and reduce the oxidation reaction of the electrolyte at the anode during a high voltage process of overcharging, i.e., greatly reduce the amount of oxidation reaction of the electrolyte with the anode in the process of overcharging, and reduce the reaction heat generated by oxidation reaction, so that the cell accumulates less heat at the beginning, and the reduction of heat accumulation at this time can reduce the possibility of decomposition of the SEI film on the cathode side, thereby promoting the energy storage device to maintain a healthier state during the overcharging process, and thus improving the performance of the energy storage device in the overcharge safety test. Exemplary, the mass fraction a of the fluorinated solvent in the electrolyte is from 1% to 30%, preferably, the mass fraction a of the fluorinated solvent in the electrolyte is from 3% to 15%.

By comparing embodiments 10 to 14, both the fluorinated solvent and the cyclic carbonate are added to the electrolyte of the energy storage device of embodiments 10 to 14. At the same time, as the content of the lithium salt LiPF6 (lithium hexafluorophosphate) in the electrolyte gradually decreases, the level of the overcharging safety performance of the energy storage device of embodiments 10 to 14 is gradually increased to the first level. The experimental results show that reducing the content of the lithium salt LiPF6 in the electrolyte can further improve the overcharging safety performance of the energy storage device. This may be due to the fact that LiPF6 in the lithium salt of electrolyte is prone to decompose and generate Lewis acids such as PF5 (phosphorus pentafluoride) and the like in the presence of water in the electrolyte, which may not only attack the solid electrolyte interface film (SEI film) on the cathode side and the anode surface passivation film (CEI film), leading to a reaction between the electrolyte and the positive electrode sheet or the negative electrode sheet in direct contact, and there is a possibility that the fluoride ions in the fluorinated solvent may be captured. Therefore, when a smaller amount of LiPF6 is contained in the electrolyte, less Lewis acid such as PF5 and the like is generated in the electrolyte, i.e., the attack of the acid on the anode CEI film and the cathode SEI film is reduced, so that less corrosion occurs on the SEI film formed on the surface of the negative electrode sheet and the CEI film formed on the surface of the positive electrode sheet and the seizure of F on the fluorinated solvent by the Lewis acid is reduced, so that the fluorinated solvent is protected from damage, so that the fluorinated solvent plays a role in the process of overcharging of the energy storage device, thereby facilitating further improvement of the overcharging safety performance of the energy storage device.

Continuing to observe embodiments 7 to 9, although the addition of fluorinated solvent within a certain content range improved the overcharging safety performance of the energy storage device in embodiment 7 to embodiment 10, the capacity retention rate of the energy storage device after 1,000 cycles at 25°C gradually decreased with the increase of the content of the fluorinated solvent, which may be due to the fact that the fluorinated solvent competes with cyclic carbonate for film formation at the cathode side. Continuing to observe embodiments 10 to 14, although decreasing the content of the lithium salt LiPF6 in the electrolyte improves the overcharging safety performance of embodiments 10 to 14, the capacity retention rate of the energy storage device after 1,000 cycles at 25°C gradually decrease. It can be seen that the overcharging safety performance of the energy storage device may be improved by adding the fluorinated solvent in a certain content range and by decreasing the content of LiPF6 in lithium salt, but there is a possibility of vicious circle in this strategy.

By comparing embodiments 15 to 18, the electrolyte of the energy storage device of embodiments 15 to 18 all contain the fluorinated solvent and the cyclic carbonate, and as the content of the cyclic carbonate solvent in the electrolyte of the energy storage device increases, the capacity retention after 1000 cycles at 25°C gradually increases while the energy storage device maintains a better overcharging safety performance. The experimental results show that by increasing the content of cyclic carbonate solvent in the electrolyte, the charging/discharging cycle performance of the energy storage device can be ensured while solving the problem of overcharging safety performance. This is because, before the fluorinated solvent forms a dense SEI film on the cathode side, the fluorinated solvent is easy to be reduced on the cathode side and the SEI film formed by the reduction product is not dense enough, which may lead to a decrease in the electrical performance of the energy storage device; by adding a high concentration of cyclic carbonate to the electrolyte, the cyclic carbonate can be ring-opened polymerized at the cathode to form the dense SEI film, which solves a problem of competition causing poor film formation when the fluorinated solvent was introduced into the electrolyte. At the same time, the high concentration of cyclic carbonate stabilizes the cathode and prevents the consumption and oxidation of fluorinated solvent on the cathode side, stabilizes the content of fluorinated solvent in the electrolyte, and thus indirectly improves the oxidation resistance of the electrolyte, which in turn facilitates the improvement of the charging/discharging cycle performance of the energy storage device while addressing the overcharging safety performance of the energy storage device.

By comparing comparative examples 8 to 12 and embodiments 1 to 23, although the fluorinated solvent, the cyclic carbonate, and the lithium salt LiPF6 are added to the electrolyte of the energy storage device in comparative example 8, however, the content a of the fluorinated solvent is less than 1%, the content b of the cyclic carbonate is less than 25%, and the content c of the lithium salt LiPF6 exceeds 10%, and the energy storage device prepared has substandard overcharging safety performance and poor charging/discharging cycling performance. The electrolyte of the energy storage device of comparative example 9 has no fluorinated solvent added, and has the cyclic carbonate with the content b being less than 25%, and the energy storage device prepared has a poor overcharging safety performance. The content a of fluorinated solvent in the electrolyte of the energy storage device of comparative example 10 exceeds 30%, and the energy storage device prepared has very poor charging/discharging cycling performance. The content c of the lithium salt LiPF6 in the electrolyte of the energy storage device of comparative example 11 is less than 7%, and the energy storage device prepared has very poor charging/discharging cycling performance. The content b of cyclic carbonate in the electrolyte of the energy storage device of comparative example 12 exceeds 45%, and the energy storage device prepared has poor overcharging safety performance. In contrast, in the electrolyte of the energy storage device of embodiments 1 to 23, by adding the fluorinated solvent, the cyclic carbonate, and the lithium salt LiPF6, and controlling the content a of fluorinated solvent in the electrolyte to meet 1% ≤ a ≤ 30%, the content b of cyclic carbonate in the electrolyte to meet 25% ≤ b ≤ 45%, and the content c of the lithium salt LiPF6 in the electrolyte to meet 7% ≤ c ≤ 10%, which is able to ensure the overcharging safety performance of the energy storage device or ensure the capacity retention rate after 1,000 cycles at 25° C., and thus ensure the charging/discharging cycling performance of the energy storage device.

Furthermore, by comparing embodiment 7, embodiment 22 with other embodiments (embodiments 1 to 6, embodiments 8 to 21, and embodiment 23), the cell capacity of the energy storage device in embodiment 7 is 280 Ah, which is a large capacity, and (1-a-b)*c/t=0.31 > 0.288, and the energy storage device has a better charging/discharging cycling performance, but the level of the overcharging safety performance is level 4, and the overcharging safety performance is not up to standard. The cell capacity of the energy storage device in embodiment 22 is 280 Ah, which is a large capacity, and (1-a-b)*c/t=0.056<0.288, and the overcharging safety performance level is level 3, and the overcharging safety performance is just up to standard. In the energy storage device of the other embodiments, the relationship equation: 0.07≤(1-a-b)*c/t≤0.288 is satisfied, and the energy storage device prepared has a larger capacity of a single cell while the overcharging safety performance level reaches level 2 or level 1, and the overcharging safety performance is very good. The experimental results show that the embodiment of the present disclosure, by controlling the coating weight t of the cathode active layer, the mass percentage content a of the fluorinated solvent, the mass percentage content b of the cyclic carbonate, and the mass percentage content c of the lithium salt LiPF6, satisfies the following relationship equation: 0.07≤(1-a-b)*c/t≤0.288, the energy storage device prepared by the present disclosure has a larger singlecell capacity and at the same time has an overcharging safety performance level of level 2 or level 1, and the overcharging safety performance is very good. When 0.07≤(1-a-b)*c/t≤0.288, the energy storage device has a larger capacity of a single cell, and the performance rating of the overcharging safety test reaches the standard, which has a better overcharging safety performance.

The above disclosure is only a preferred embodiment of the present disclosure, which of course cannot be used to limit the scope of the present disclosure. A person of ordinary skill in the art can understand that all or part of the process for realizing the above embodiment, and equivalent changes made in accordance with the claims of the present disclosure, still fall within the scope of the present disclosure.

## Claims

1. An electrolyte, wherein, the electrolyte comprises, by mass of electrolyte, a fluorinated solvent with a mass percentage a, a cyclic carbonate with a mass percentage b, and a lithium hexafluorophosphate with a mass percentage c, wherein 1% ≤ a ≤ 30%, 25% ≤ b ≤ 45%, and 7% ≤ c ≤ 10%.

2. The electrolyte according to claim 1, wherein the cyclic carbonate is selected from at least one of vinyl carbonate, propylene carbonate, fluorinated vinyl carbonate, difluorinated vinyl carbonate, and vinylidene carbonate.

3. The electrolyte according to claim 1, wherein the fluorinated solvent comprises at least one of fluorinated carbonate, fluorinated carboxylic acid ester, and fluorinated ether.

4. The electrolyte according to claim 3, wherein the fluorinated carbonate is selected from at least one of chemical formula (I-1) to chemical formula (I-7): 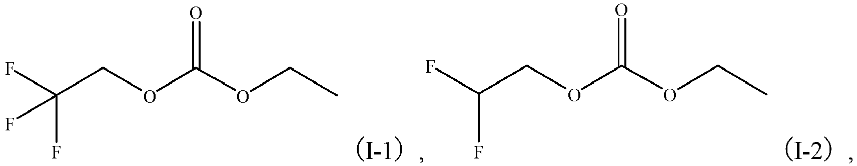 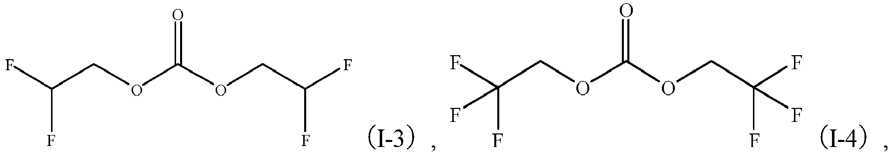 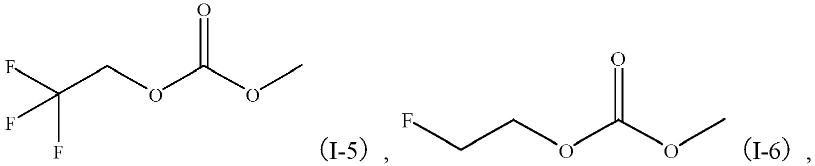 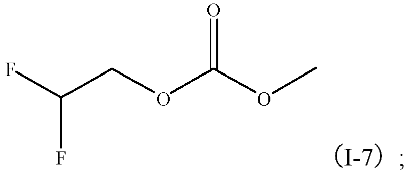 the fluorinated carboxylic acid ester is selected from at least one of chemical formula (I-8) to chemical formula (I-17): 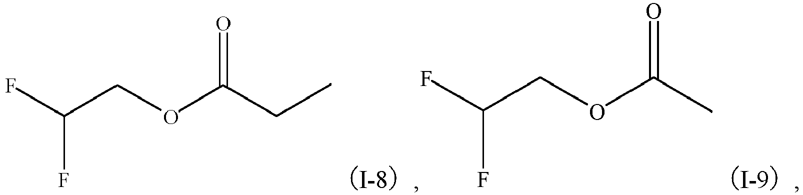 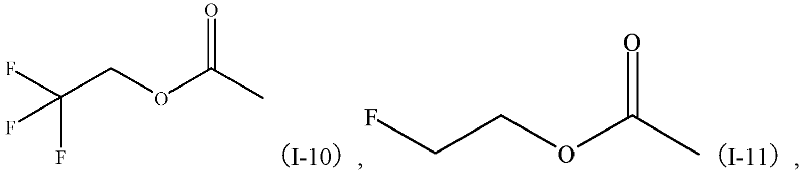 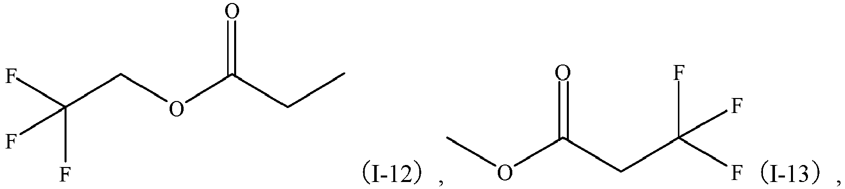 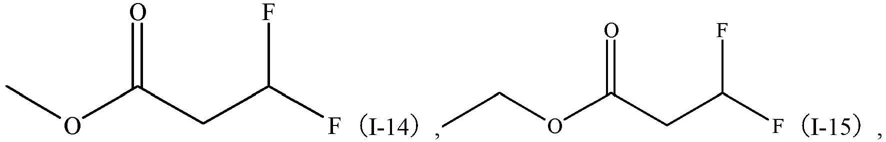 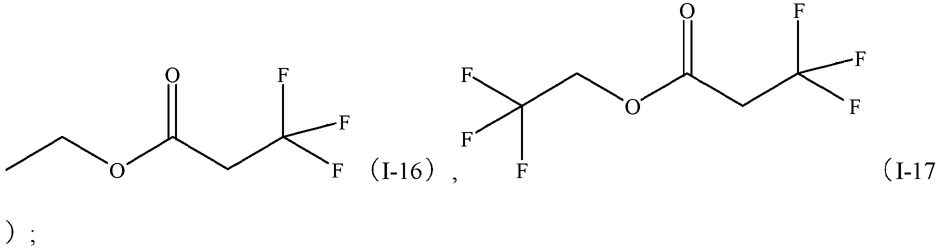 the fluorinated ether is selected from at least one of chemical formula (I-18) to chemical formula (I-21):

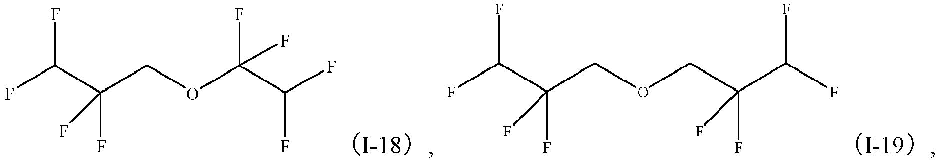

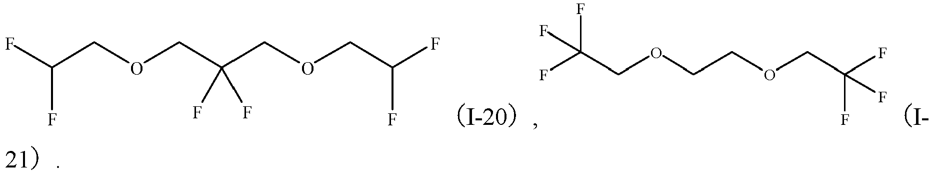

5. The electrolyte according to any one of claims 1 to 4, wherein the electrolyte comprises a lithium salt; the lithium salt comprises the lithium hexafluorophosphate; the lithium salt further comprises at least one of lithium difluorophosphate, lithium bis(fluorosulfonyl)imidebistrifluoromethanesulfonimide lithium salt, lithium oxalyldifluoro borate, lithium bis(oxalate)borate, lithium tetrafluoroborate.

6. An energy storage device, wherein the energy storage device comprises a positive electrode sheet and an electrolyte according to any one of claims 1 to 5.

7. The energy storage device according to claim 6, wherein the positive electrode sheet comprises an anode current collector and an anode active layer coated on a surface of the anode current collector, and in the positive electrode sheet, a coating density of the anode active layer is t g/1540.25 mm², and the following relation is satisfied: 0.07≤(1-a-b)*c/t≤0.288.

8. The energy storage device according to claim 7, wherein 0.25≤t≤0.4.

9. The energy storage device according to claim 7, wherein materials in the anode active layer comprises lithium iron phosphate.

10. The energy storage device according to any one of claims 6-9, wherein the energy storage device has a capacity of not less than 280Ah.
